# FASCICULE DE BREVET EUROPEEN

(11) **EP 0 708 894 B1**
(45) Date de publication et mention de la délivrance du brevet: **13.08.1997**
(21) Numéro de dépôt: 94922280.6
(22) Date de dépôt: 20.07.1994
(51) Int. Cl.: F16D 31/04, F16H 3/72

(54) **DISPOSITIF D'ACCOUPLEMENT VOLUMETRIQUE**
VOLUMETRISCHE KUPPLUNG
VOLUMETRIC COUPLING DEVICE

(30) Priorité: 23.07.1993 FR 9309125
(43) Date de publication de la demande: 01.05.1996
(73) Titulaire: ANTONOV AUTOMOTIVE TECHNOLOGIES B.V., 3013 AL Rotterdam (NL)
(72) Inventeur: ANTONOV, Roumen, F-75008 Paris (FR)
(74) Mandataire: Pontet, Bernard
(86) Numéro de dépôt international: FR9400906
(87) Numéro de publication internationale: WO9503498

(56) Documents cités:
- EP-A- 0 351 510
- WO-A-91/13275
- FR-A- 403 315
- FR-A- 601 961
- FR-A- 845 747
- FR-A- 1 119 770
- FR-A- 1 191 526
- US-A- 3 130 607

## Description

La présente invention concerne un dispositif d'accouplement volumétrique, du genre dans lequel on commande la libération ou le blocage du refoulement d'une pompe hydraulique pour sélectivement interdire ou permettre une rotation relative entre deux éléments de la pompe.

La présente invention concerne également un dispositif de transmission à au moins deux rapports et dans lequel la fonction de démarrage progressif est assurée par un dispositif d'accouplement du genre indiqué au début.

On connaît, par exemple d'après le FR-A-1 191 526 et le US-A-3 130 607, des dispositifs d'accouplement volumétrique comportant une denture commune engrenant avec plusieurs satellites supportés en rotation dans une cage, pour constituer autant de pompes hydrauliques élémentaires qu'il y a de satellites. Dans de nombreuses applications en effet, il est nécessaire d'avoir recours à de multiples pompes élémentaires pour que la pression générée dans la région de refoulement de chaque pompe lorsque le refoulement est bloqué n'atteigne pas des valeurs prohibitives.

Dans les dispositifs d'accouplement connus, des trajets de refoulement relient les régions de refoulement des différentes pompes élémentaires avec une valve de commande de la libération ou du blocage du refoulement des pompes élémentaires. Lorsque le refoulement est bloqué, la denture commune ne peut plus tourner par rapport à la cage et il y a donc accouplement entre eux.

Il y a deux raisons pour lesquelles la denture commune a en pratique un diamètre relativement grand. D'une part la denture commune doit engrener avec de nombreux satellites, ce qui conduit à lui donner un périmètre important. D'autre part, plus la denture commune a un grand diamètre et plus le moment de la force produite par chaque pompe élémentaire lorsque son refoulement est bloqué est élevé.

Par conséquent, plus le moment d'accouplement à obtenir est élevé, et plus devront être choisis élevés le nombre de satellites et le diamètre de la denture commune. Or, lorsque le refoulement des pompes élémentaires est libéré, le débit de fluide hydraulique produit par les pompes est proportionnel au nombre de satellites et au diamètre de la denture commune. En conclusion, l'obtention d'un moment d'accouplement donné a nécessairement pour conséquence un débit de fluide hydraulique donné lorsque le dispositif est à l'état désaccouplé.

Or, on constate que dans la plupart des situations, ces débits atteignent des valeurs extrêmement élevées, correspondant à des vitesses de circulation d'huile très élevées dans les canaux de liaison entre les régions de refoulement, la valve de commande, la réserve d'huile, puis de celle-ci jusqu'aux régions d'aspiration. Dans la grande majorité des cas, ces vitesses sont tout à fait prohibitives quelle que soit la conception envisagée pour les canaux et la valve. Il en résulte du bruit de fonctionnement, de l'échauffement, des pertes de charge, et l'impossibilité de réaliser un désaccouplement parfait.

Le but de la présente invention est ainsi de proposer un dispositif d'accouplement volumétrique utilisable dans de nombreuses situations pratiques, en particulier pour l'accouplement progressif entre les roues motrices d'un véhicule et un moteur thermique lors du démarrage, qui soit techniquement simple et offre de bonnes qualités de désaccouplement sans que la pression du fluide hydraulique à l'état accouplé soit excessive.

Suivant l'invention, le dispositif d'accouplement volumétrique comprenant une denture commune engrenant avec au moins un satellite monté en rotation dans une enveloppe pour former avec chaque satellite et l'enveloppe une pompe hydraulique élémentaire comprenant une région d'aspiration de fluide hydraulique et une région de refoulement de fluide hydraulique de part et d'autre d'une région d'engrènement entre la denture commune et chaque satellite, et des moyens de distribution pour sélectivement permettre et empêcher l'écoulement de fluide hydraulique à partir de la région de refoulement de chaque pompe, est caractérisé en ce que les moyens de distribution comprennent un organe mobile évidé adjacent à l'une des faces de chaque satellite, et en ce que l'organe mobile est déplaçable entre une position de libération dans laquelle il établit grâce à sa constitution évidée une communication directe entre les régions d'aspiration et de refoulement, et une position d'accouplement dans laquelle il obture l'une au moins des deux régions d'aspiration et de refoulement associées à chaque satellite.

Dans le dispositif selon l'invention, les trajets de refoulement et d'aspiration ne sont plus centralisés. Ils sont extrêmement raccourcis et les évidements qui constituent ces trajets peuvent offrir à l'écoulement une section tranversale aussi grande que cela paraît souhaitable pour ramener les vitesses de circulation d'huile à une valeur raisonnable. On réduit donc à la fois la vitesse et la distance à parcourir par l'huile, et chacune de ces deux réductions entraîne une réduction correspondante des pertes de charge. Celles-ci sont donc ramenées à un niveau raisonnable. Pour commander le blocage ou la libération du refoulement des pompes élémentaires, on déplace l'organe mobile pour que le ou les évidements isole ou au contraire relie à une région d'aspiration la ou chaque région de refoulement. Ainsi, lorsque chaque région de refoulement est isolée, la haute pression n'existe pratiquement que dans la région de refoulement de la ou chaque pompe élémentaire, ce qui réduit à un strict minimum les problèmes d'étanchéité haute pression.

On connaît certes d'après le FR-A-601 961 et le FR-A-1 119 770 des dispositifs d'accouplement dans lesquels un organe rotatif évidé commande le débit d'une pompe à engrenage. Mais selon ces documents l'organe rotatif évidé, au lieu d'être adjacent à une face du ou des satellites, en est séparé par une paroi percée d'au moins une lumière. En outre, la communication que l'organe rotatif évidé est susceptible d'établir entre le refoulement et l'aspiration de la pompe n'est qu'indirecte, car cette communication passe en outre par ladite lumière, par une réserve, par une lumière d'admission etc...

Selon un autre aspect de l'invention, celle-ci vise conformément au WO-A-91 13 275, un dispositif de transmission à au moins deux rapports et démarrage progressif, comprenant un dispositif d'accouplement progressif, un mécanisme différentiel ayant un élément d'entrée, un élément de sortie et un élément de réaction relié à un support par une roue libre pour faire sélectivement fonctionner le mécanisme différentiel selon un premier rapport de transmission dans lequel l'élément de réaction tend à tourner par rapport au support dans un sens interdit par la roue libre, et selon un deuxième rapport de transmission dans lequel l'élément de réaction tourne par rapport au support dans le sens autorisé par la roue libre.

Suivant cet autre aspect de l'invention, le dispositif de transmission est caractérisé en ce que le dispositif d'accouplement est monté fonctionnellement entre le support et un carter du dispositif de transmission, et comprend une denture commune engrenant avec au moins un satellite monté en rotation dans une enveloppe pour former avec chaque satellite et l'enveloppe une pompe hydraulique élémentaire comprenant une région d'aspiration de fluide hydraulique et une région de refoulement de fluide hydraulique de part et d'autre d'une région d'engrènement entre la denture commune et chaque satellite, et un organe mobile évidé adjacent à l'une des faces de chaque satellite, et en ce que l'organe mobile est déplaçable entre une position de libération dans laquelle il établit grâce à sa constitution évidée une communication directe entre les régions d'aspiration et de refoulement et une position d'accouplement dans laquelle il obture l'une au moins des deux régions d'aspiration et de refoulement associées à chaque satellite.

D'autres particularités et avantages de l'invention ressortiront encore de la description ci-après, relative à un exemple non limitatif.

Aux dessins annexés :
- la figure 1 est une vue schématique partielle, en perspective avec arrachements, partiellement en coupe, d'un dispositif de transmission selon l'invention ;
- la figure 2 représente un détail de la figure 1 lorsque le mécanisme différentiel fonctionne en réducteur ;
- la figure 3 est une vue de face d'un dispositif d'accouplement selon l'invention, en coupe selon le plan III-III de la figure 4, avec arrachements, à l'état de désaccouplement dans la partie supérieure de la figure et à l'état d'accouplement dans la partie inférieure de la figure, la partie supérieure droite étant cependant coupée selon IIIa-IIIa de la figure 4 ;
- la figure 4 est une vue en coupe selon IV-IV de la figure 3.

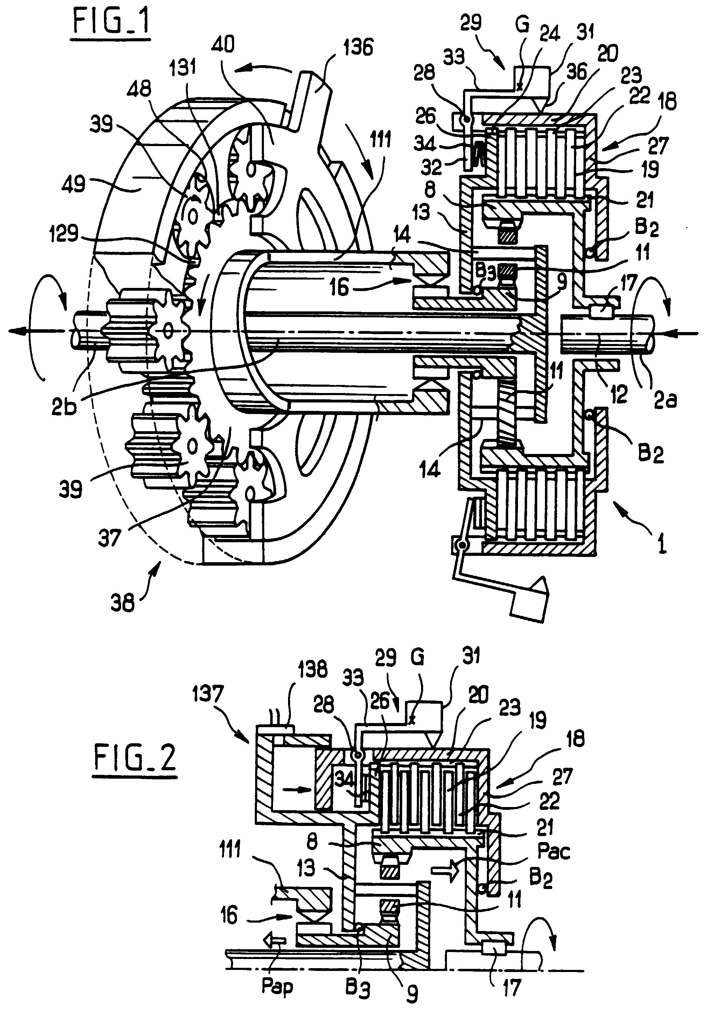

Le dispositif de transmission à deux rapports représenté à la figure 1, destiné en particulier à une automobile, comprend un mécanisme différentiel 1, monté entre un arbre d'entrée 2a et un arbre de sortie 2b de la transmission. L'arbre d'entrée 2a est accouplé à l'arbre de sortie (non représenté) d'un moteur de véhicule (non représenté) sans interposition d'embrayage. L'arbre de sortie 2b peut être relié à l'entrée d'un différentiel pour l'entraînement des roues motrices d'un véhicule. Entre l'arbre de sortie 2b et l'entrée du différentiel peuvent être interposés un inverseur marche avant - marche arrière à commande manuelle et/ou un ou plusieurs autres mécanismes à deux rapports ou plus pour augmenter le nombre de rapports de transmission disponibles.

Les arbres d'entrée 2a et de sortie 2b sont immobilisés axialement relativement à un carter (non représenté à la figure 1) de la transmission.

Le mécanisme différentiel comprend une couronne 8 à denture intérieure et une roue planétaire 9 à denture extérieure, engrenant toutes deux avec des satellites 11 supportés, à intervalles angulaires égaux autour de l'axe 12 du dispositif de transmission, par un porte-satellites 13 relié rigidement à l'arbre de sortie 2b. L'ensemble est agencé en train épicycloïdal, tous les axes géométriques des dentures étant parallèles entre eux.

Les satellites 11 peuvent tourillonner librement autour de tourillons excentrés 14 du porte-satellites 13. La roue planétaire 9 peut tourner librement autour de l'axe 12 du dispositif de transmission par rapport à l'arbre de sortie 2b qu'elle entoure. Toutefois, un dispositif de roue libre 16 empêche la roue planétaire 9 de tourner en inverse, c'est à dire en sens inverse du sens normal de rotation de l'arbre d'entrée 2a, par rapport à un support 111 conformé en moyeu.

La couronne 8 est liée en rotation, mais libre en coulissement axial relativement à l'arbre d'entrée 2a du mécanisme, par l'intermédiaire de cannelures symbolisées en 17.

Un embrayage 18 est disposé autour de la couronne 8. Il comprend un empilement de disques annulaires 19 alternant avec des disques annulaires 22. Les disques 19 sont reliés en rotation à la couronne 8 avec possibilité de coulissement axial. Pour cela, les disques 19 ont des dents intérieures engagées dans des cannelures 21 solidaires de la couronne 8. Les disques 22 sont liés en rotation, avec possibilité de coulissement axial, au porte-satellites 13. Pour cela, une cage 20 comporte, sur sa face radialement intérieure, des cannelures 23 dans lesquelles sont engagées de façon axialement coulissante d'une part des dents extérieures des disques 22 et d'autre part des dents extérieures 24 du porte-satellites 13.

L'empilement de disques 19 et 22 peut être serré axialement entre un plateau de retenue 26 solidaire du porte-satellites 13 et un plateau mobile 27 qui fait partie de la cage 20.

La cage 20 supporte des masselottes centrifuges 29 disposées en couronne autour de l'embrayage 18.

Les masselottes sont donc liées en rotation à l'arbre de sortie 2b du dispositif de transmission.

Chaque masselotte a un corps massif 31 situé radialement à l'extérieur des disques 19 et 22 et un bec d'actionnement 32 appuyé contre une face extérieure du plateau fixe 26 par l'intermédiaire d'un ressort belleville 34. Le bec 32 est relié au corps massif 31 par un bras coudé 33 articulé à la cage 20 autour d'un axe géométrique 28 orienté tangentiellement par rapport à l'axe 12 du dispositif. Le WO-A-91/13275 décrit des dispositions avantageuses pour le montage articulé de telles masselottes. Le centre de gravité G de la masselotte est situé à l'intérieur ou au voisinage du corps massif 31, en une position qui présente par rapport à l'axe 28 un certain écartement mesuré parallèlement à l'axe 12 du dispositif.

Ainsi, la rotation du porte-satellites 13 tend à faire pivoter radialement vers l'extérieur les corps 31 des masselottes 29 autour de leur axe tangentiel 28 sous l'action de leur force centrifuge, pour les faire passer d'une position rabattue définie par une butée 36 contre la cage 20 (haut de la figure 1 et figure 2) à une position écartée visible en bas de la figure 1.

Le passage de l'une à l'autre de ces positions s'accompagne d'un déplacement axial relatif entre le bec 32 et l'axe d'articulation 28 de la masselotte, donc entre le bec 32 et la cage 20. Une butée axiale B2 interposée entre la cage 20 et la couronne 8 transmet à cette dernière les mouvements axiaux de la cage 20 dans le sens de déplacement correspondant à l'écartement centrifuge des masselottes 29.

En outre, le déplacement de la cage 20 par rapport au bec 32 provoque un mouvement de rapprochement relatif entre le bec 32 et le plateau mobile 27 de l'embrayage 18b. Ce déplacement relatif peut correspondre à une compression du ressort belleville 34 et/ou à un déplacement du plateau mobile 27 vers le plateau fixe 26 dans le sens du serrage de l'embrayage 18b.

Lorsque la transmission est au repos comme représenté en haut de la figure 1, le ressort belleville 34 transmet à la cage 20, par l'intermédiaire des masselottes 29 en position rabattue, une force qui serre l'embrayage 18 de sorte que l'entrée 2a est couplée en rotation avec la sortie 2b et le mécanisme constitue une prise directe capable de transmettre du couple jusqu'à un certain maximum défini par la force de serrage du ressort belleville.

D'autre part, les dentures de la couronne 8, des satellites 11 et la roue planétaire 9 sont de type hélicoïdal. Ainsi, dans chaque couple de dentures engrenant sous charge, il apparaît des poussées axiales opposées proportionnelles à la force circonférentielle transmise, donc au couple sur l'arbre d'entrée 2a et au couple sur l'arbre de sortie 2b. Les satellites 11, qui engrènent non seulement avec la couronne 8 mais aussi avec la roue planétaire 9, subissent deux réactions axiales opposées qui s'équilibrent, et la roue planétaire 9 subit, compte-tenu de son engrènement avec les satellites 11, une poussée axiale Pap qui est égale en intensité et opposée à la poussée axiale Pac de la couronne 8. La poussée Pap de la roue planétaire 9 est transmise au carter par l'intermédiaire d'une butée B3 et du porte-satellites 13. Le sens d'inclinaison hélicoïdale des dentures est choisi pour que la poussée axiale Pac (figure 2) prenant naissance dans la couronne 8 lorsqu'elle transmet un couple moteur soit dans le sens tendant, par l'intermédiaire de la butée B2, à écarter le plateau mobile 27 du plateau de retenue 26 de l'embrayage, donc à desserrer l'embrayage 18, à maintenir les masselottes 29 dans leur position rabattue et à comprimer le ressort 34, comme représenté à la figure 2.

En supposant cette situation réalisée (figure 2), on va maintenant décrire le fonctionnement de base du mécanisme différentiel 1. Tant que le couple transmis au module par l'arbre d'entrée 2a est tel que la poussée axiale Pac dans la couronne 8 suffit pour comprimer le ressort belleville 34 et maintenir les masselottes 29 dans la position rabattue représentée à la figure 2, l'écartement entre le plateau de retenue 26 et le plateau mobile 27 de l'embrayage est tel que les disques 19 et 22 glissent les uns contre les autres sans transmettre de couple entre eux. Dans ce cas, le porte-satellites 13 peut tourner à une vitesse différente de celle de l'arbre d'entrée 2a, et il tend à être immobilisé par la charge liée à l'arbre de sortie 2b du mécanisme. Il en résulte que les satellites 11 tendent à se comporter en inverseurs de mouvement, c'est à dire à faire tourner la roue planétaire 9 en sens inverse du sens de rotation de la couronne 8. Mais ceci est empêché par la roue libre 16, le moyeu support 111 étant supposé pour l'instant immobile. La roue planétaire 9 est donc immobilisée par la roue libre 16 et le porte-satellites 13 tourne à une vitesse qui est intermédiaire entre la vitesse nulle de la roue planétaire 9 et la vitesse de la couronne 8 et de l'arbre d'entrée 2a. Le mécanisme fonctionne donc en réducteur. Si la vitesse de rotation augmente et que le couple reste inchangé, il arrive un instant où la force centrifuge des masselottes 29 produit entre le plateau de retenue 26 et le plateau mobile 27 une force axiale de serrage plus grande que la poussée axiale Pac, et le plateau mobile 27 est poussé vers le plateau 26 pour réaliser la prise directe, comme représenté en bas de la figure 1.

Lorsque l'embrayage 18b est serré, les dentures ne travaillent plus, c'est à dire qu'elles ne transmettent plus aucune force et elles ne donnent donc naissance à aucune poussée axiale. Ainsi, la poussée axiale due à la force centrifuge peut s'exercer pleinement pour serrer les plateaux 26 et 27 l'un vers l'autre.

Il peut alors arriver que la vitesse de rotation de l'arbre de sortie 2a diminue, et/ou que le couple à transmettre augmente, au point que les masselottes 29 n'assurent plus dans l'embrayage 18 une force de serrage suffisante pour transmettre le couple. Dans ce cas, l'embrayage 18 commence à patiner. La vitesse de la roue planétaire 9 diminue jusqu'à s'annuler. La roue libre 16 immobilise la roue planétaire et la force de denture Pac réapparaît pour desserrer l'embrayage, de sorte que le mécanisme fonctionne ensuite en réducteur comme décrit en référence à la figure 2.

Le rôle du ressort belleville 34 est double. D'une part, en serrant les embrayages lorsque la transmission est au repos, il réalise un couplage mécanique entre l'entrée et la sortie du mécanisme. Ainsi, le véhicule à l'arrêt est retenu par le moteur lorsque celui-ci est lui-même à l'arrêt.

D'autre part, le ressort belleville 34 permet au mécanisme de fonctionner en prise directe pour des vitesses, relativement basses, où la force centrifuge, proportionnelle au carré de la vitesse, serait si faible que le moindre couple à transmettre provoquerait, de manière non souhaitable en pratique, un maintien ou une tendance au retour au fonctionnement en réducteur.

Le moyeu 111 est solidaire du rotor 37 d'un frein de démarrage 38.

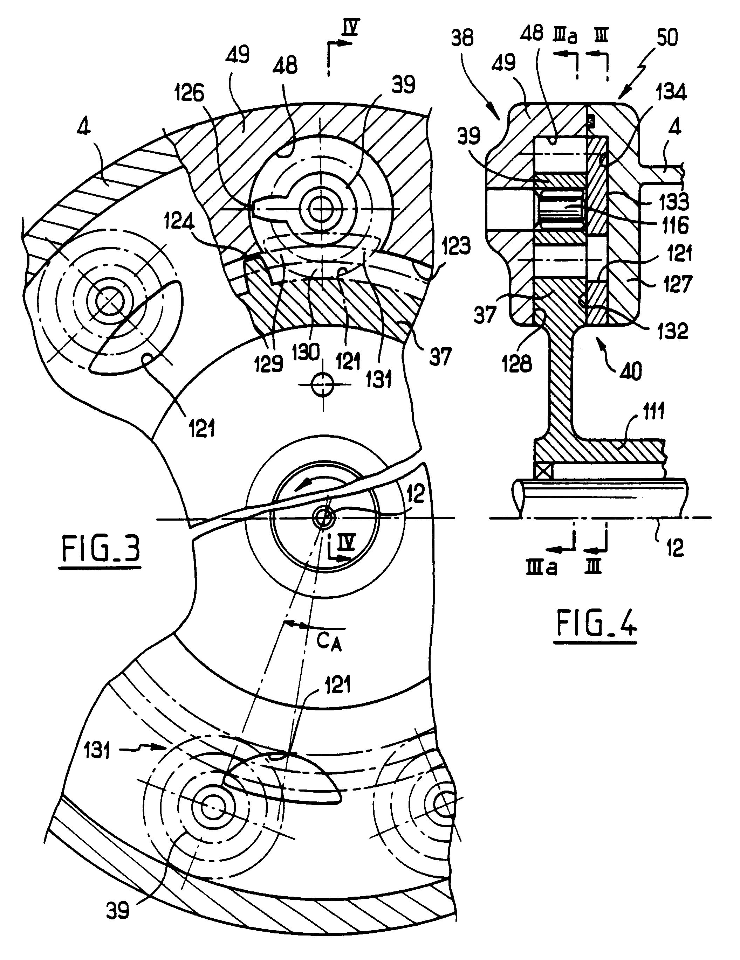

Comme le montrent également les figures 3 et 4, le frein 38 est constitué par un dispositif d'accouplement volumétrique à engrenage dont le rotor 37 est une roue planétaire montée en rotation selon l'axe 12 et engrenant avec huit pignons satellites 39 dont les axes de rotation sont parallèles à l'axe 12 et répartis autour de celui-ci. La roue planétaire 37 forme avec chaque satellite 39 une pompe hydraulique élémentaire du type à engrenage. Une enveloppe annulaire 50, à profil en U ouvert vers l'axe 12, coiffe la périphérie de la roue planétaire 37 et enferme les satellites 39.

L'enveloppe 50 comprend un flasque 127 solidaire du carter 4 et une cage 49 fixée de manière étanche au flasque 127. La cage 49 comprend une paroi périphérique intérieure 123 qui définit des alvéoles 48 pour les satellites. La paroi 123 est en relation d'étanchéité par proximité avec les sommets 124 des dents de la roue planétaire 37 et 126 des dents des satellites 39, sauf dans les régions d'engrènement 130. La cage 49 comprend en outre un épaulement 128 qui est en relation d'étanchéité par proximité avec l'une des faces de la roue planétaire 37 le long du pourtour extérieur de cette dernière, et avec la face correspondante des satellites 39.

Ainsi, la cage 49 ferme de façon étanche l'une des extrémités axiales de chaque creux de denture de la roue planétaire 37 et des satellites 39, et ferme aussi de façon étanche les ouvertures périphériques desdits creux de denture qui sont hors engrènement. Des tourillons 116 fixés à la cage 49 supportent en rotation les satellites 39.

Entre le flasque 127 d'une part et la roue planétaire 37 et les satellites 39 d'autre part, est interposée une bague distributrice 40 en forme de plaque annulaire radiale qui est directement au contact de la roue planétaire 37 et des satellites 39.

La bague 40 présente, pour chaque satellite 39, un évidement 121 qui communique avec certains creux de denture de la roue planétaire 37. En dehors des évidements 121, la bague distributrice 40 présente en regard de la roue planétaire 37 et des satellites 39 une face plane 132 assurant un contact étanche avec les faces adjacentes de la roue planétaire 37 et des satellites 39 de manière à fermer de manière étanche les creux de dentures de la roue planétaire 37 et des satellites 39. Ainsi, les creux de denture sont fermés de manière étanche de toutes parts sauf lorsqu'ils communiquent avec un évidement 121 ou lorsqu'ils communiquent entre eux dans la région d'engrènement 130. Les satellites 39 sont positionnés axialement entre l'épaulement 128 de la cage 49 et la face 132 de la bague 40. La bague 40 est supportée avec possibilité de rotation autour de l'axe 12 à la fois par rapport au carter 4 et à la cage 49 qui lui est fixée et par rapport à la roue planétaire 37.

La bague distributrice 40 peut ainsi prendre autour de l'axe 12 une position angulaire de libération du frein, représentée en haut de la figure 3, dans laquelle chaque évidement 121 fait communiquer une région d'aspiration 129 de la pompe élémentaire avec une région de refoulement 131. De manière connue pour les pompes à engrenage, la région d'aspiration 129 correspond à la région où les dents de la roue planétaire 37 et du satellite concerné 39 désengrènent les unes par rapport aux autres et la région de refoulement correspond à une région où les dents de la roue planétaire 37 et du satellite 39 concerné commencent à engrener l'une avec l'autre, compte-tenu des sens de rotation représentés par des flèches à la figure 3. Les régions d'aspiration 129 et de refoulement 131 sont donc situées de part et d'autre de la région d'engrènement 130. Dans la position de libération, le refoulement de chaque pompe communique avec l'aspiration par l'intermédiaire de l'évidement associé 121, pratiquement sans perte de charge, car il suffit à l'huile de passer du refoulement dans l'évidement 121, puis du même évidement 121 dans l'aspiration, sans avoir aucun trajet à faire autre que celui défini par l'évidement 121. Ainsi le rotor 37 peut tourner sans résistance par rapport à l'enveloppe 50 solidaire du carter 4 du dispositif de transmission.

Par rotation de la bague distributrice 40 sur sa course angulaire maximum C_{A} à partir de la position de libération du frein, les évidements 121 peuvent être amenés dans une position angulaire d'accouplement, représentée en bas de la figure 3, dans laquelle ils ne communiquent plus avec les creux de denture de la roue planétaire 37 et des satellites 39 qui sont dans la région de refoulement 131.

Dans la position d'accouplement, le refoulement de chaque pompe hydraulique élémentaire est bloqué et ceci bloque la roue planétaire 37, à l'exception, le cas échéant, d'une rotation résiduelle permise par les écoulements de fuite.

Entre les deux positions extrêmes qui viennent d'être décrites, la bague distributrice 40 peut occuper n'importe qu'elle position intermédiaire correspondant à un freinage plus ou moins important mais non absolu du moyeu 111 dont la roue planétaire 37 est solidaire.

Dans la réalisation représentée, la bague distributrice 40 est relativement mince et les évidements 121 sont des évidements traversants. La bague 40 comporte du côté du flasque 127 une face plane 133 qui est en contact étanche avec une face plane correspondante 134 du flasque 127 pour fermer de manière étanche les évidements 121 du côté opposé aux dentures.

A la figure 1, on a représenté schématiquement la bague distributrice 40 munie d'une languette de commande 136 reliée à sa périphérie. En pratique, la languette 136 peut être reliée à un système de commande manuelle ou automatique pour piloter une mise en mouvement progressive du véhicule.

Le fonctionnement général du dispositif de transmission est le suivant.

Lorsque le véhicule et le moteur sont à l'arrêt, le mécanisme différentiel est au repos dans la situation représentée en haut de la figure 1, c'est à dire prise directe grâce au ressort belleville 34, de sorte que l'embrayage 18 relie les arbres d'entrée et de sortie 2a et 2b indépendamment de l'état du frein volumétrique 38.

Avant de mettre en marche le moteur, le véhicule devant demeurer à l'arrêt, on place la bague 40 en position de libération (partie supérieure de la figure 3), et on alimente, par l'intermédiaire d'un raccord à joint tournant 138, un vérin annulaire 137 (figure 2) agissant entre le porte-satellites 13 et la cage 20 pour desserrer l'embrayage à l'encontre de l'action des ressorts belleville 34. Pour simplifier le dessin, le vérin 137 n'a pas été représenté à la figure 1. Il n'est rendu nécessaire que par la présence du ressort belleville 34 qui constitue lui-même un perfectionnement non indispensable. Lorsque le vérin 137 est alimenté et que la bague 40 est en position de désaccouplement, l'arbre d'entrée 2a entraîne la couronne 8, et celle-ci provoque la rotation en inverse de la roue planétaire 9 car le porte-satellites 13 est immobilisé par le véhicule maintenu à l'arrêt. La rotation en inverse de la roue planétaire 9 est transmise par la roue libre 16 à la roue planétaire 37 du frein 38, dont la rotation est permise par le positionnement de la bague 40 en position de libération. Ceci réalise la situation de point mort, c'est à dire de désaccouplement entre les arbres d'entrée 2a et de sortie 2b lorsque le véhicule est à l'arrêt (arbre de sortie 2b immobile) alors que l'arbre d'entrée 2a tourne. C'est grâce à cette fonction du frein 38 que l'on peut supprimer l'embrayage ou le convertisseur de couple traditionnellement monté entre le moteur du véhicule et l'entrée 2a du dispositif de transmission. Pour provoquer la mise en mouvement progressive de l'arbre de sortie 2b, on fait progressivement passer la bague 40 en position d'accouplement pour freiner progressivement le rotor 37 au moyen d'une perte de charge croissante dans le trajet de l'huile à travers les évidements 121. Ceci peut être réalisé manuellement ou par des moyens de pilotage automatique.

Ceci freine progressivement jusqu'à l'arrêt total le moyeu support 111 et avec lui la roue planétaire 9, et met progressivement en rotation le porte-satellites 13 et donc l'arbre de sortie 2b. A ce stade, la pression peut être relâchée dans le vérin 137 et ensuite le dispositif de transmission fonctionne en réducteur ou en prise directe de la manière qui a été décrite précédemment.

Lorsque le frein 38 est à l'état libéré, le débit d'huile relativement important de chaque pompe hydraulique élémentaire n'a qu'un très court trajet à effectuer dans l'évidement 121 qui lui correspond, en dehors du trajet de transport par les dentures.

L'invention n'est nullement limitée à la réalisation décrite et représentée. L'embrayage 18 pourrait être commandé par tout autre moyen que ceux décrits, par exemple manuellement ou encore par un vérin commandé par un circuit de pilotage hydraulique ou électronique.

Le frein 38 pourrait être réalisé différemment, par exemple avec deux bagues distributrices, une de chaque côté de la roue planétaire et des satellites, pour augmenter encore la facilité d'écoulement à l'état libéré.

Du côté de la bague 40, l'enveloppe, c'est à dire dans l'exemple le flasque 127, pourrait être réduite pour supprimer les régions éloignées des positions possibles des évidements 121.

Il pourrait n'y avoir qu'un seul satellite, en prévoyant par exemple un contrepoids en position diamétralement opposée.

Pour isoler les régions de refoulement, on peut aussi décaler chaque évidement par rapport à la région d'aspiration associée. Dans ce cas, c'est l'ensemble constitué par la région de refoulement et l'évidement correspondant qui est isolé, mais le résultat est le même, excepté que les fuites possibles pour le fluide hydraulique à haute pression sont plus nombreuses.

Les évidements 121 pourraient communiquer entre eux.

## Revendications

1. Dispositif d'accouplement volumétrique comprenant une denture commune (37) engrenant avec au moins un satellite (39) monté en rotation dans une enveloppe (50) pour former avec chaque satellite et l'enveloppe une pompe hydraulique élémentaire comprenant une région d'aspiration de fluide hydraulique (129) et une région de refoulement de fluide hydraulique (131) de part et d'autre d'une région d'engrènement (130) entre la denture commune (37) et chaque satellite (39), et des moyens de distribution (40) pour sélectivement permettre et empêcher l'écoulement de fluide hydraulique à partir de la région de refoulement (131) de chaque pompe, caractérisé en ce que les moyens de distribution comprennent un organe mobile évidé (40) adjacent à l'une des faces de chaque satellite (39), et en ce que l'organe mobile (40) est déplaçable entre une position de libération dans laquelle il établit grâce à sa constitution évidée une communication directe entre les régions d'aspiration (129) et de refoulement (131), et une position d'accouplement dans laquelle il obture l'une au moins des deux régions d'aspiration (129) et de refoulement (131) de chaque satellite (39).

2. Dispositif de transmission à au moins deux rapports et démarrage progressif, comprenant un dispositif d'accouplement progressif (38), un mécanisme différentiel (1) ayant un élément d'entrée (8), un élément de sortie (13) et un élément de réaction (9) relié à un support (111) par une roue libre (16) pour faire sélectivement fonctionner le mécanisme différentiel selon un premier rapport de transmission dans lequel l'élément de réaction (9) tend à tourner par rapport au support (111) dans un sens interdit par la roue libre (16), et selon un deuxième rapport de transmission dans lequel l'élément de réaction (9) tourne par rapport au support (111) dans le sens autorisé par la roue libre (16), caractérisé en ce que le dispositif d'accouplement (38) est monté fonctionnellement entre le support (111) et un carter (4) du dispositif de transmission, et comprend une denture commune (37) engrenant avec au moins un satellite (39) monté en rotation dans une enveloppe (50) pour former avec chaque satellite et l'enveloppe une pompe hydraulique élémentaire comprenant une région d'aspiration de fluide hydraulique (129) et une région de refoulement de fluide hydraulique (131) de part et d'autre d'une région d'engrènement (130) entre la denture commune (37) et chaque satellite (39), et un organe mobile évidé (40) adjacent à l'une des faces de chaque satellite (39), et en ce que l'organe mobile (40) est déplaçable entre une position de libération dans laquelle il établit par sa constitution évidée une communication directe entre les régions d'aspiration (129) et de refoulement (131), et une position d'accouplement dans laquelle il obture l'une au moins des régions d'aspiration (129) et de refoulement (131) de chaque satellite (39).

3. Dispositif selon la revendication 1 ou 2, caractérisé en ce que l'organe mobile (40) est un organe monté avec possibilité de rotation autour de l'axe (12) de la denture commune (37) pour passer de l'une à l'autre des positions d'accouplement et de libération.

4. Dispositif selon l'une des revendications 1 à 3, comprenant plusieurs satellites, caractérisé en ce que l'organe mobile (40) comprend plusieurs évidements (121) qui, lorsque l'organe mobile (40) est en position de libération, font chacun communiquer les régions d'aspiration (129) et de refoulement (131) d'une même pompe hydraulique élémentaire respective.

5. Dispositif selon l'une des revendications 1 à 4, dans lequel les axes de la denture commune (37) et de satellite (39) sont parallèles, caractérisé en ce que l'organe mobile (40) est en forme de plaque.

6. Dispositif selon l'une des revendications 1 à 5, caractérisé en ce que l'organe mobile (40) est annulaire autour de l'axe (12) de la denture commune (37).

7. Dispositif selon l'une des revendications 1 à 6, caractérisé en ce que l'organe mobile (40) a en outre la fonction mécanique d'immobiliser axialement chaque satellite entre ledit organe mobile et une face opposée (128), appartenant à l'enveloppe (50).

8. Dispositif selon la revendication 6, caractérisé en ce que l'organe mobile (40) est aussi en relation d'étanchéité avec la denture commune (37), pour fermer de façon étanche les extrémités de certains au moins des creux de la denture commune qui sont écartés des évidements (121).

9. Dispositif selon l'une des revendications 1 à 8, caractérisé en ce que l'enveloppe (50) a au moins à l'emplacement de chaque satellite, une section en U entourant le satellite (39) et l'organe mobile (40).

10. Dispositif selon l'une des revendications 1 à 9, caractérisé en ce qu'au moins un évidemment (121) traverse l'organe mobile (40), et en ce qu'une face (133) de l'organe mobile (40) opposée à la denture commune (37) est en contact étanche avec une paroi adjacente (134) de l'enveloppe (50), au moins autour de chaque évidemment (121).

## Patentansprüche

1. Volumetrische Kuppelvorrichtung, mit einer gemeinsamen Zahnung (37), die in mindestens ein Planetenrad (39) eingreift, das drehbar in einer Hülle (50) montiert ist, um mit jedem Planetenrad und der Hülle eine elementare Hydraulikpumpe zu bilden, mit einem Bereich zum Ansaugen von Hydraulikfluid (129) und einem Bereich zum Fördern von Hydraulikfluid (131) auf beiden Seiten eines Eingriffsbereichs (130) zwischen der gemeinsamen Zahnung (37) und jedem Planetenrad (39), und Verteilungsmitteln (40), um selektiv das Abfließen von Hydraulikfluid von dem Förderbereich (131) jeder Pumpe zu gestatten oder zu verhindern, dadurch gekennzeichnet, daß die Verteilungsmittel ein bewegliches ausgespartes Element (40) umfassen, das an eine der Seiten jedes Planetenrades (39) angrenzt, und daß das bewegliche Element (40) zwischen einer Freigabeposition, in der es dank seiner ausgesparten Ausführung eine direkte Verbindung zwischen dem Ansaugbereich (129) und dem Förderbereich (131) herstellt, und einer Kupplungsposition, in der es mindestens einen der beiden Bereiche, Ansaugbereich (129) oder Förderbereich (131), jedes Planetenrades (39) verschließt, verschiebbar ist.

2. Getriebevorrichtung mit mindestens zwei Übersetzungen und schrittweisem Anlauf, mit einer schrittweisen Kuppelvorrichtung (38), einem Differentialmechanismus (1), der ein Eingangselement (8), ein Ausgangselement (13) und ein Reaktionselement (9) umfaßt, das an eine Stütze (111) durch einen Freilauf (16) angeschlossen ist, um selektiv den Differentialmechanismus in einem ersten Übersetzungsverhältnis, bei dem das Reaktionselement (9) dazu neigt, sich in bezug auf die Stütze (111) in eine durch den Freilauf (16) verbotene Richtung zu drehen, oder in einem zweiten Übersetzungsverhältnis zu betreiben, bei dem sich das Reaktionselement (9) in bezug zu der Stütze (111) in die durch den Freilauf (16) gestattete Richtung dreht, dadurch gekennzeichnet, daß die Kuppel vorrichtung (38) funktional zwischen der Stütze (111) und einem Gehäuse (4) der Getriebevor richtung montiert ist und eine gemeinsame Zahnung (37), die in mindestens ein Planetenrad (39) eingreift, das drehbar in einer Hülle (50) montiert ist, um mit jedem Planetenrad und der Hülle eine elementare Hydraulikpumpe zu bilden, mit einem Bereich zum Ansaugen von Hydraulikfluid (129) und einem Bereich zum Fördern von Hydraulikfluid (131) auf beiden Seiten eines Eingriffsbereichs (130) zwischen der gemeinsamen Zahnung (37) und jedem Planetenrad (39), und ein ausgespartes bewegliches Element (40) umfaßt, das an eine der Seiten jedes Planetenrades (39) angrenzt, und daß das bewegliche Element (40) zwischen einer Freigabeposition, in der es durch seine ausgesparte Ausführung eine direkte Verbindung zwischen dem Ansaugbereich (129) und dem Förderbereich (131) herstellt, und einer Kupplungsposition, in der es mindestens einen der Bereiche, Ansaugbereich (129) oder Förderbereich (131), jedes Planetenrades (39) verschließt, verschiebbar ist.

3. Vorrichtung nach Anspruch 1 oder 2, dadurch gekennzeichnet, daß das bewegliche Element (40) ein Element darstellt, das mit der Möglichkeit der Drehung um die Achse (12) der gemeinsamen Zahnung (37) montiert ist, um von der Kupplungsposition in die Freigabeposition, oder umgekehrt, überzugehen.

4. Vorrichtung nach einem der Ansprüche 1 bis 3, mit mehreren Planetenrädern, dadurch gekennzeichnet, daß das bewegliche Element (40) mehrere Aussparungen (121) umfaßt, die, wenn sich das bewegliche Element (40) in Freigabeposition befindet, jeweils die Ansaug- (129) und Förderbereiche (131) einer selben jeweiligen elementaren Hydraulikpumpe miteinander in Verbindung bringen.

5. Vorrichtung nach einem der Ansprüche 1 bis 4, bei der die Achsen der gemeinsamen Zahnung (37) und des Planetenrades (39) parallel sind, dadurch gekennzeichnet, daß das bewegliche Element (40) Plattenform aufweist.

6. Vorrichtung nach einem der Ansprüche 1 bis 5, dadurch gekennzeichnet, daß das bewegliche Element (40) ringförmig um die Achse (12) der gemeinsamen Zahnung (37) angeordnet ist.

7. Vorrichtung nach einem der Ansprüche 1 bis 6, dadurch gekennzeichnet, daß das bewegliche Element (40) ferner die mechanische Funktion hat, jedes Planetenrad axial zwischen dem beweglichen Element und einer gegenüberliegenden Seite (128), die der Hülle (50) angehört, festzustellen.

8. Vorrichtung nach Anspruch 6, dadurch gekennzeichnet, daß das bewegliche Element (40) auch mit der gemeinsamen Zahnung (37) in dichter Verbindung steht, um die Enden von zumindest gewissen Hohlräumen der gemeinsamen Zahnung, die von den Aussparungen (121) entfernt sind, dicht zu verschließen.

9. Vorrichtung nach einem der Ansprüche 1 bis 8, dadurch gekennzeichnet, daß die Hülle (50) mindestens an der Stelle eines jeden Planetenrades einen U-förmigen Querschnitt aufweist, der das Planetenrad (39) und das bewegliche Element (40) umgibt.

10. Vorrichtung nach einem der Ansprüche 1 bis 9, dadurch gekennzeichnet, daß mindestens eine Aussparung (121) das bewegliche Element (40) durchquert und daß eine Seite (133) des beweglichen Elements (40), die der gemeinsamen Zahnung (37) abgewandt ist , mit einer angrenzenden Wandung (134) der Hülle (50) zumindest um jede Aussparung (121) herum in dichtem Kontakt steht.

## Claims

1. A positive displacement coupling device comprising a common toothed member (37) engaging with at least one planet gear (39) mounted in rotation in a housing (50) to form with each planet gear and the housing an individual hydraulic pump comprising an hydraulic fluid inlet area (129) and an hydraulic fluid delivery area (131) on either side of an engagement area (130) between said common toothed member (37) and each planet gear (39), and distribution means (40) selectively to enable and prevent the flow of hydraulic fluid from delivery area (131) of each pump, characterised in that the distribution means comprise a cutaway movable organ (40) adjacent to one of the faces of each planet gear (39), and in that said movable organ (40) can be moved between a release position in which it establishes, due to its cutaway structure, direct communication between said inlet (129) and delivery (131) areas, and a coupling position in which it blocks off at least one of the two inlet (129) and delivery (131) areas of each planet gear (39).

2. A transmission device with at least two ratios and gradual starting, comprising a gradual coupling device (38), a differential mechanism (1) having an input element (8), an output element (13) and a reaction element (9) connected to a support (111) by a free wheel (16) to make the differential mechanism operate selectively according to a first transmission ratio in which said reaction element (9) tends to turn in relation to said support (111) in a direction prevented by said free wheel (16), and according to a second transmission ratio in which said reaction element (9) turns in relation to said support (111) in the direction permitted by said free wheel (16), characterised in that said coupling device (38) is mounted operationally between said support (111) and a casing (4) of the transmission device, and comprises a common toothed member (37) engaging with at least one planet gear (39) mounted in rotation in a housing (50) to form with each planet gear and the housing an individual hydraulic pump comprising an hydraulic fluid inlet area (129) and an hydraulic fluid delivery area (131) on either side of an engagement area (130) between said common toothed member (37) and each planet gear (39), and a movable cutaway organ (40) adjacent to one of the faces of each planet gear (39), and in that said movable organ (40) can be moved between a release position in which it establishes, due to its cutaway structure, direct communication between said inlet (129) and delivery (131) areas and a coupling position in which it blocks off at least one of the two inlet (129) and delivery (131) areas of each planet gear (39).

3. A device according to claim 1 or 2, characterised in that said movable organ (40) is an organ mounted with the possibility of rotation around the axis (12) of said common toothed member (37) for movement between the coupling and release positions.

4. A device according to one of claims 1 to 3, comprising several planet gears, characterised in that said movable organ (40) has several cutaway sections (121) which, when said movable organ (40) is in the release position, are each causing the inlet (129) and delivery (131) areas of a same respective individual hydraulic pump to communicate.

5. A device according to one of claims 1 to 4, in which the axes of said common toothed member (37) and planet gear (39) are parallel, characterised in that said movable organ (40) is in the form of a plate.

6. A device according to one of claims 1 to 5, characterised in that said movable organ (40) forms a ring around the axis (12) of said common toothed member (37).

7. A device according to one of claims 1 to 6, characterised in that said movable organ (40) also has the mechanical function of axially immobilising each planet gear between the said movable organ and an opposing face (128), belonging to said housing (50).

8. A device according to claim 6, characterised in that said movable organ (40) is also in a sealed relationship with said common toothed member (37), in order to seal the ends of some at least of the spaces between teeth of the common toothed member which are away from said cutaway sections (121).

9. A device according to one of claims 1 to 8, characterised in that said housing (50), at the location of each planet gear, has at least one U section surrounding said planet gear (39) and said movable organ (40).

10. A device according to one of claims 1 to 9, characterised in that at least one cutaway section (121) is cut throughout said movable organ (40), and in that said movable organ (40) has one face facing away from said common toothed member (37) and being in sealed contact with an adjacent wall (134) of said housing (50), at least around each cutaway section (121).
